# EUROPÄISCHE PATENTSCHRIFT

(11) **EP 0 994 000 B1**
(45) Veröffentlichungstag und Bekanntmachung des Hinweises auf die Patenterteilung: **30.03.2005**
(21) Anmeldenummer: 99119574.4
(22) Anmeldetag: 02.10.1999
(51) Int. Cl.: B60S 1/52

(54) **Düsenhorn mit einer Aufnahme für zumindest eine Waschdüse**
Spray head with housing for at least one washer jet
Tête de gicleur avec logement pour au moins un gicleur de lavage

(30) Priorität: 15.10.1998 DE 19847473
(43) Veröffentlichungstag der Anmeldung: 19.04.2000
(73) Patentinhaber: Siemens Aktiengesellschaft, 80333 München (DE)
(72) Erfinder: Martin, Uwe, 36199 Rotenburg (DE)

(56) Entgegenhaltungen:
- EP-A- 0 572 147
- DE-A- 4 011 128
- DE-A- 4 338 639
- GB-A- 2 323 271
- US-A- 4 955 543

## Beschreibung

Die Erfindung betrifft ein Düsenhorn mit einer Aufnahme für zumindest eine Waschdüse einer Scheibenreinigungsanlage eines Kraftfahrzeuges, mit einem Anschlußstück für von einer Stelleinrichtung teleskopartig verfahrbare, von Waschflüssigkeit durchströmbare Rohre, und mit einem durch die relative Bewegung der teleskopartig verfahrbaren Rohre schaltbaren Ventil zum Verschließen eines zu der Waschdüse führenden Kanals in Ruhestellung der Scheibenreinigungsanlage und mit einem Schließglied des Ventils zum Verschließen eines der in Ruhestellung befindlichen Rohre.

Solche Düsenhörner werden häufig zur Befestigung von Waschdüsen an anderen Bauteilen von Scheibenreinigungsanlagen eingesetzt. Scheibenreinigungsanlagen, bei denen die Waschdüse ausgefahren werden kann, werden meist für Streuscheiben von Scheinwerfern des Kraftfahrzeuges eingesetzt. Hierbei befindet sich die Waschdüse in Ruhestellung beispielsweise in einer geschützten Position unterhalb eines Stoßfängers des Kraftfahrzeuges. Das Ventil verhindert, daß bei Kurvenfahrten des Kraftfahrzeuges Waschflüssigkeit aus der Waschdüse austritt. Aus der EP 0 572 147 A1 ist eine Scheibenreinigungsanlage bekannt geworden, bei der das Schließglied des Ventils an einem einen Anschlußstutzen für eine Schlauchleitung aufweisenden Rohr angeordnet ist. Damit wird die Relativbewegung der Rohre zum Betätigen des Ventils genutzt. Das Ventil ist damit von dem Düsenhorn entfernt. Das den Anschlußstutzen für die Schlauchleitung aufweisende Rohr ist zudem sehr kompliziert aufgebaut. Weiterhin ist aus der Praxis ein Ventil bekannt, bei dem im Anschlußstück des Düsenhorns eine Kugel angeordnet ist, die von einer Feder gegen einen Ventilsitz vorgespannt ist. Bei einer Strömung von Waschflüssigkeit zu der Waschdüse öffnet das Ventil oberhalb eines bestimmten Druckes. Hierdurch wird sichergestellt, daß das Ventil nur von einem starken Druck einer Waschflüssigkeitspumpe geöffnet werden kann.

Nachteilig bei dem bekannten Düsenhorn ist, daß es sehr aufwendig aufgebaut ist.

Der Erfindung liegt das Problem zugrunde, ein Düsenhorn der eingangs genannten Art so zu gestalten, daß es besonders einfach aufgebaut und kostengünstig herstellbar ist.

Dieses Problem wird erfindungsgemäß dadurch gelöst, daß das Düsenhorn das Schließglied des Ventils trägt.

Da der Schließkörper oder ein Ventilsitz des Ventils unmittelbar an dem Düsenhorn angeordnet ist, sind keine zusätzlich zu montierenden und zu führenden Bauteile erforderlich. Das erfindungsgemäße Düsenhorn ist damit besonders einfach aufgebaut und läßt sich kostengünstig herstellen. Durch die Anordnung des Schließkörpers des Ventils im Düsenhorn nahe an der Waschdüse hat die Scheibenreinigungsanlage eine kurze Reaktionszeit Ein weiterer Vorteil dieser Gestaltung besteht darin, daß eine Strömung von Waschflüssigkeit zu der Waschdüse durch das Ventil in Ruhestellung der Scheibenreinigungsanlage dauerhaft unterbunden wird. Hierdurch kann bei einem Klemmen der teleskopartig verfahrbaren Rohre die Waschdüse keine Waschflüssigkeit in der Ruhestellung unter dem Stoßfänger versprühen.

Das erfindungsgemäße Düsenhorn gestaltet sich konstruktiv besonders einfach, wenn das Düsenhorn zur Befestigung an einem äußeren Rohr vorgesehen ist und wenn das Schließglied als in Ruhestellung an der inneren Wandung eines inneren Rohres anliegender Dichtring ausgebildet ist.

Ein vorgesehener Sprühbereich der Waschdüse läßt sich gemäß einer anderen vorteilhaften Weiterbildung der Erfindung einfach eingrenzen, wenn der Dichtring auf einem Zapfen angeordnet ist. Hierdurch ist es beispielsweise durch eine entsprechende Länge des Zapfens möglich, erst dann Waschflüssigkeit aus der Waschdüse austreten zu lassen, wenn die Waschdüse einen vorgesehenen Hubweg zurückgelegt hat. Damit wird ein Versprühen von Waschflüssigkeit in den Stoßfänger zuverlässig vermieden.

Das erfindungsgemäße Düsenhorn läßt sich besonders kostengünstig in einer axial entformbaren Form fertigen, wenn er einen an seinem dem Zapfen abgewandten Ende von einem Verschlußstopfen verschlossenen zentralen Kanal aufweist.

Der Zapfen führt gemäß einer anderen vorteilhaften Weiterbildung der Erfindung nur zu einer unwesentlichen Drosselung der Strömung von Waschflüssigkeit in dem Kanal, wenn der Zapfen an auf der Innenseite des Kanals angeordneten, in Längsrichtung des Kanals weisenden Stegen befestigt ist.

Ein vorgesehener Abstand des Dichtrings zu den feststehenden Bauteilen innerhalb der teleskopartig verfahrbaren Rohre läßt sich gemäß einer anderen vorteilhaften Weiterbildung der Erfindung einfach durch einen zur Anlage an dem Rohr vorgesehenen Bund sicherstellen. Hierdurch wird das Düsenhorn bis zu seinem Bund in das äußere Rohr geschoben. Das Ventil ist damit ausgerichtet.

Häufig werden mehrere Waschdüsen auf dem Düsenhorn angeordnet. Hierdurch können die Scheiben mit in Bewegungsrichtung hintereinander angeordneten Waschdüsen in mehreren Waschgängen gewaschen werden oder es lassen sich mit nebeneinander angeordneten Waschdüsen besonders breite Scheiben reinigen. Hierbei trägt es zur weiteren Vereinfachung der Herstellung des erfindungsgemäßen Düsenhorns bei, wenn seitlich neben dem zentralen Kanal angeordnete Aufnahmen für Waschdüsen mit einem geraden Querkanal verbunden sind und wenn der Querkanal an beiden Enden von jeweils einem Stopfen verschlossen ist.

Das erfindungsgemäße Düsenhorn läßt sich mit besonders geringem Aufwand für Scheibenreinigungsanlagen nahezu beliebig gestalteter Scheiben anpassen, wenn die Aufnahme für die Waschdüse einen Kugelsitz und eine in dem Kugelsitz verschwenkbare Verstellkugel aufweist. Damit kann ein Standardtyp des Düsenhorns für die meisten Kraftfahrzeuge hergestellt werden. Entsprechende Sprühwinkel der Waschdüsen lassen sich anschließend entsprechend der zu besprühenden Scheibe einstellen.

Das erfindungsgemäße Düsenhorn läßt sich zur Montage einfach in einem der Rohre einpressen, wenn an dem Anschlußstück mehrere umlaufende, zur Anlage an der Innenseite eines der Rohre vorgesehene Stege angeordnet sind. Die Stege dienen anschließend als Abdichtung des Düsenstocks gegenüber dem Rohr. Dies führt zu einer besonders kostengünstigen Montage des Düsenhorns.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig.1: eine vor einer Streuscheibe montierte Reinigungsvorrichtung einer Scheibenreinigungsanlage in einer Grundstellung mit einem erfindungsgemäßen Düsenhorn,
- Fig.2: die Reinigungsvorrichtung aus Figur 1 in einem Längsschnitt,
- Fig.3: die Reinigungsvorrichtung aus Figur 1 in einer ausgefahrenen Stellung der Waschdüse,
- Fig.4: eine weitere Ausführungsform des erfindungsgemäßen Düsenhorns in einem Längsschnitt,
- Fig.5: das Düsenhorn aus Figur 4 in einer Schnittdarstellung entlang der Linie V - V.

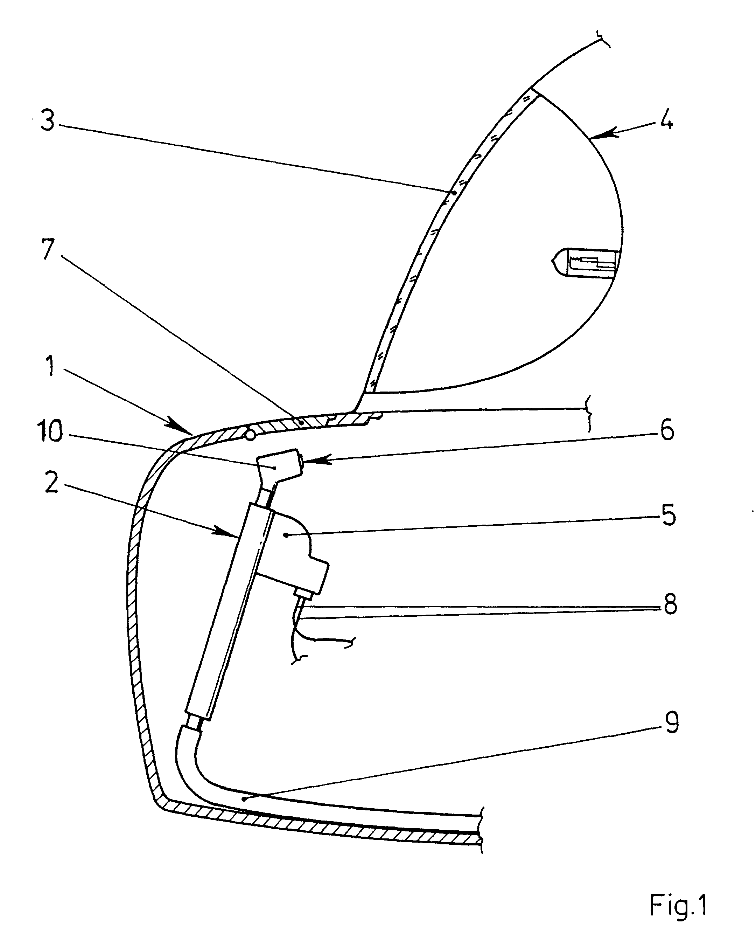

Die Figur 1 zeigt eine in einem vorderen Stoßfänger 1 eines Kraftfahrzeuges montierte Reinigungsvorrichtung 2. Oberhalb des Stoßfängers 1 ist eine Streuscheibe 3 eines Scheinwerfers 4 angeordnet. Die Reinigungsvorrichtung 2 hat eine von einer Stelleinrichtung 5 verfahrbare Waschdüse 6. Die Waschdüse 6 befindet sich hier in einer Ruhestellung unterhalb einer Klappe 7 des Stoßfängers 1. An der Stelleinrichtung 5 sind elektrische Leitungen 8 für die Stelleinrichtung 5 und eine Waschflüssigkeitsleitung 9 angeschlossen. Die Waschdüse 6 ist auf einem Düsenhorn 10 angeordnet und wird von einer nicht dargestellten Pumpe mit Waschflüssigkeit versorgt.

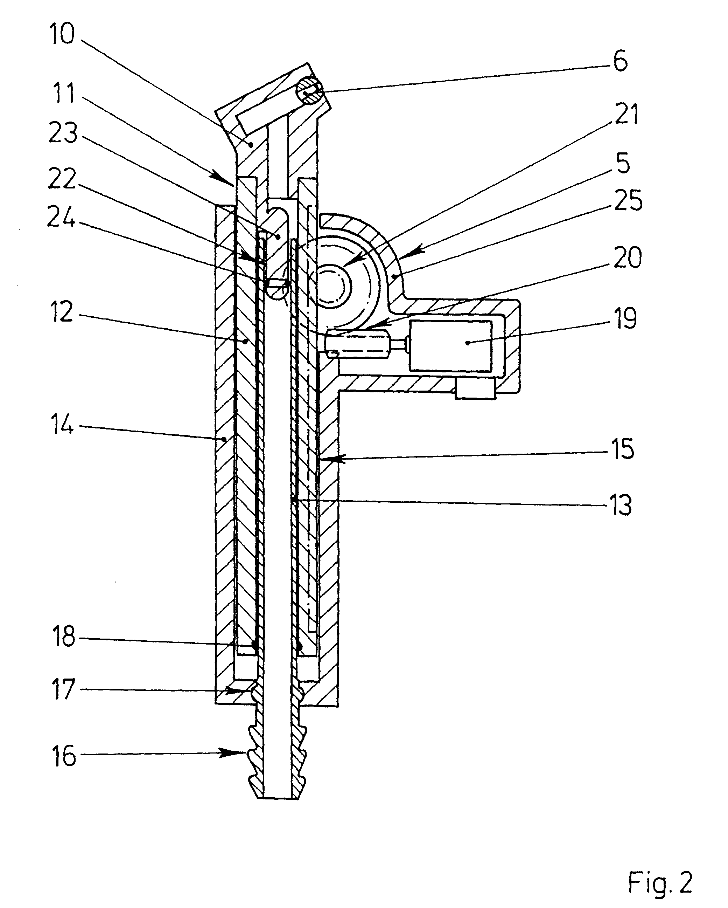

Die Figur 2 zeigt die Reinigungsvorrichtung 2 aus Figur 1 in einem Längsschnitt. Das Düsenhorn 10 ist auf einem zwei teleskopartig ineinanderschiebbare Rohre 12, 13 aufweisenden Träger 11 angeordnet. Das äußere Rohr 12 ist innerhalb einer Führungshülse 14 angeordnet und hat auf seiner der Stelleinrichtung 5 zugewandten Seite eine Zahnstange 15. Das innere Rohr 13 hat einen Anschlußstutzen 16 für die in Figur 1 dargestellte Waschflüssigkeitsleitung 9 und durchdringt die Führungshülse 14 in einem Bodenbereich. An dieser Stelle hat das innere Rohr eine Rastverbindung 17 mit der Führungshülse 14. Das innere Rohr 13 ist im Bereich der Rastverbindung 17 gegenüber der Führungshülse 14 abgedichtet. Das äußere Rohr 12 hat einen gegen das innere Rohr 13 vorgespannten Dichtring 18. Die Stelleinrichtung 5 hat einen Elektromotor 19, der über ein Schneckengetriebe 20 mit einem Untersetzungsgetriebe 21 verbunden ist. Das Untersetzungsgetriebe 21 steht im Eingriff mit der Zahnstange 15 des äußeren Rohres 12. Hierdurch läßt sich das äußere Rohr 12 zusammen mit der Waschdüse 6 verfahren. Der Elektromotor 19 ist senkrecht zu der Zahnstange 15 des äußeren Rohres 12 angeordnet. Die Führungshülse 14 und ein Gehäuse 25 der Stelleinrichtung 5 sind einteilig gestaltet.

Das Düsenhorn 10 hat ein das innere Rohr 13 in der eingezeichneten Stellung verschließendes Ventil 22. Das Ventil 22 weist einen in das innere Rohr 13 eindringenden Zapfen 23 mit einem Dichtring 24 auf. Hierdurch kann nur dann Waschflüssigkeit zu der Waschdüse 6 gelangen, wenn das äußere Rohr 12 soweit ausgefahren ist, daß sich der Dichtring 24 außerhalb des inneren Rohres 13 befindet. Bei einem Klemmen des Trägers 11 in der eingezeichneten Ruhestellung der Waschdüse 6 kann damit keine Waschflüssigkeit in den in Figur 1 dargestellten Stoßfänger 1 gespritzt werden. Durch die Länge des Zapfens 23 läßt sich damit festlegen, ab welcher Position der Waschdüse 6 vor der in Figur 1 dargestellten Streuscheibe 3 Waschflüssigkeit aus der Waschdüse 6 austreten kann.

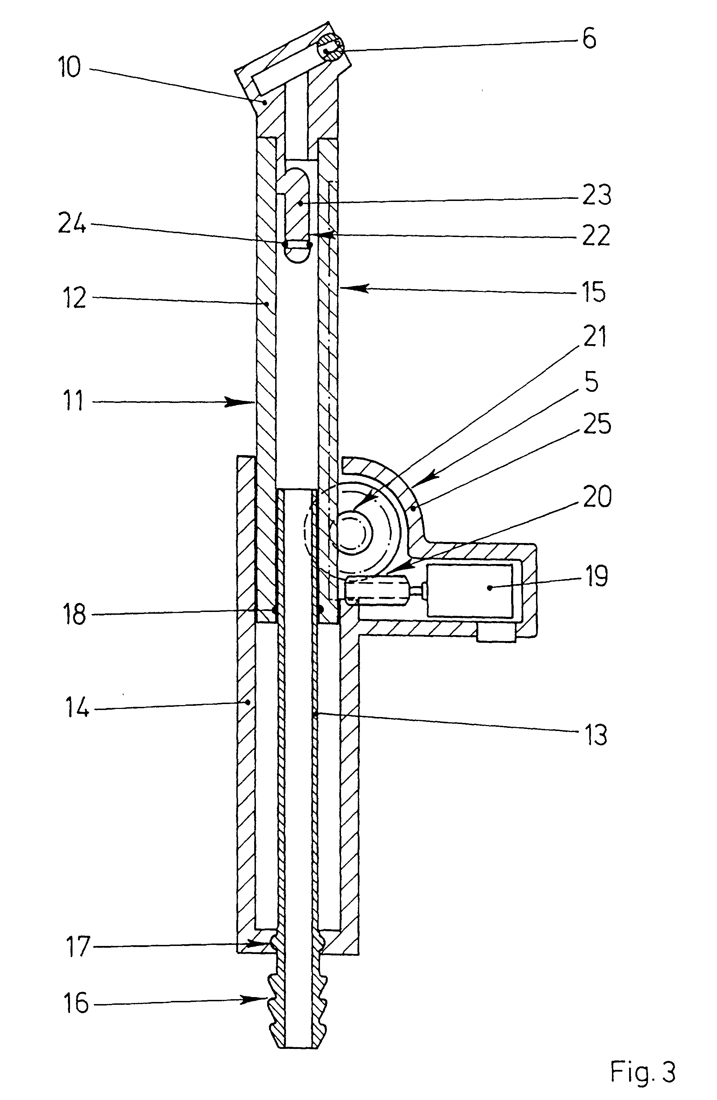

Die Figur 3 zeigt die erfindungsgemäße Reinigungsvorrichtung 2 aus Figur 1 in einer ausgefahrenen Endstellung. Der auf dem Zapfen 23 angeordnete Dichtring 24 befindet sich außerhalb des inneren Rohres 13, so daß Waschflüssigkeit von dem Anschlußstutzen 16 bis zu der Waschdüse 6 gelangen kann.

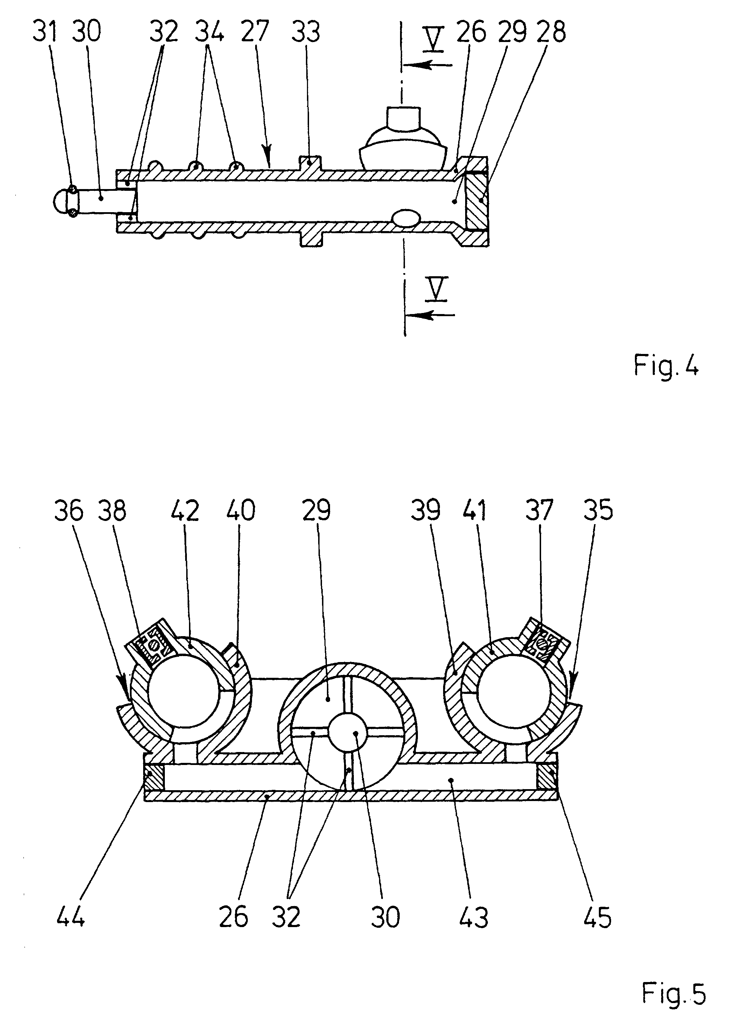

Die Figur 4 zeigt eine weitere Ausführungsform eines Düsenhorns 26 mit einem Anschlußstück 27 für das in Figur 2 dargestellte Rohr 12 und mit einem zentralen, an einem Ende von einem Verschlußstopfen 28 verschlossenen Kanal 29. Auf seinem dem Verschlußstopfen 28 abgewandten Ende ist ein Zapfen 30 mit einem Dichtring 31 angeordnet. Der Zapfen 30 wird von an der Innenseite des Kanals 29 angeordneten Stegen 32 gehalten. Auf dem Anschlußstück 27 sind ein umlaufender Bund 33 und mehrere im Verhältnis zu dem Bund 33 kleinere Stege 34 angeordnet. Die Stege 34 dienen zum Einpressen und Abdichten gegenüber dem in Figur 2 dargestellten Rohr 12. Das Düsenhorn 26 läßt sich hierdurch bis zu dem Bund 33 in das Rohr 12 einschieben.

Die Figur 5 zeigt das Düsenhorn 26 aus Figur 4 in einer stark vergrößerten Schnittdarstellung entlang der Linie V - V. Hierbei ist zu erkennen, daß das Düsenhorn 26 zwei seitlich neben dem zentralen Kanal 29 angeordnete Aufnahmen 35, 36 für jeweils eine Waschdüse 37, 38 hat. Die Aufnahmen 35, 36 haben jeweils eine in einem Kugelsitz 39, 40 verschwenkbare Verstellkugel 41, 42. Zu den Verstellkugeln 41, 42 führt ein durchgehender Querkanal 43, der an seinen Enden von Stopfen 44, 45 verschlossen ist.

## Patentansprüche

1. Düsenhorn (10, 16) mit einer Aufnahme für zumindest eine Waschdüse (6, 37, 38) einer Scheibenreinigungsanlage eines Kraftfahrzeuges, mit einem Anschlussstück für von einer Stelleinrichtung (5) teleskopartig verfahrbare, von Waschflüssigkeit durchströmbare Rohre (13), und mit einem durch die relative Bewegung der teleskopartig verfahrbaren Rohre (13) schaltbaren Ventil (22)zum Verschließen eines zu der Waschdüse (6, 37, 38) führenden Kanals in Ruhestellung der Scheibenreinigungsanlage und mit einem Schließglied des Ventils (22) zum Verschließen eines der in Ruhestellung befindlichen Rohre (13), **dadurch gekennzeichnet, dass** das Düsenhorn (10, 26) das Schließglied des Ventils (22) trägt.

2. Düsenhorn nach Anspruch 1, **dadurch gekennzeichnet, daß** das Düsenhorn (10, 26) zur Befestigung an einem äußeren Rohr (12) vorgesehen ist und daß das Schließglied als in Ruhestellung an der inneren Wandung eines inneren Rohres (13) anliegender Dichtring (18, 31) ausgebildet ist.

3. Düsenhorn nach Anspruch 1 oder 2, **dadurch gekennzeichnet, daß** der Dichtring (18, 31) auf einem Zapfen (23, 30) angeordnet ist.

4. Düsenhorn nach zumindest einem der vorhergehenden Ansprüche, **dadurch gekennzeichnet, daß** es einen an seinem dem Zapfen (30) abgewandten Ende von einem Verschlußstopfen (28) verschlossenen zentralen Kanal (29) aufweist.

5. Düsenhorn nach zumindest einem der vorhergehenden Ansprüche, **dadurch gekennzeichnet, daß** der Zapfen (30) an auf der Innenseite des Kanals (29) angeordneten, in Längsrichtung des Kanals (29) weisenden Stegen (32) befestigt ist.

6. Düsenhorn nach zumindest einem der vorhergehenden Ansprüche, **gekennzeichnet durch** einen zur Anlage an dem Rohr (12) vorgesehenen Bund (33).

7. Düsenhorn nach zumindest einem der vorhergehenden Ansprüche, **dadurch gekennzeichnet, daß** seitlich neben dem zentralen Kanal (29) angeordnete Aufnahmen (35, 36) für Waschdüsen (37, 38) mit einem geraden Querkanal (43) verbunden sind und daß der Querkanal (43) an beiden Enden von jeweils einem Stopfen (44, 45) verschlossen ist.

8. Düsenhorn nach zumindest einem der vorhergehenden Ansprüche, **dadurch gekennzeichnet, daß** die Aufnahme (35, 36) für die Waschdüse (37, 38) einen Kugelsitz (39, 40) und eine in dem Kugelsitz (39, 540) verschwenkbare Verstellkugel (41, 42) aufweist.

9. Düsenhorn nach zumindest einem der vorhergehenden Ansprüche, **dadurch gekennzeichnet, daß** an dem Anschlußstück (27) mehrere umlaufende, zur Anlage an der Innenseite eines der Rohre (12) vorgesehene Stege (34) angeordnet sind.

## Claims

1. Spray head (10, 16) with a housing for at least one washer jet (6, 37, 38) of a headlamp cleaning system of a motor vehicle, having a connection piece for pipes (13) that are telescopically moveable by an adjusting device (5) and are capable of carrying a flow of washer fluid, and having a valve (22) which can be switched by the relative movement of the telescopically moveable pipes (13) for closing a duct leading to the washer jet (6, 37, 38) in the rest position of the headlamp cleaning system and having a closing member of the valve (22) for closing one of the pipes (13) situated in the rest position, **characterized in that** the spray head (10, 26) carries the closing member of the valve (22).

2. Spray head according to Claim 1, **characterized in that** the spray head (10, 26) is intended for fixing to an outer pipe (12) and that the closing member takes the form of a sealing ring (18, 31) which in the rest position bears on the inner wall of an inner pipe (13).

3. Spray head according to Claim 1 or 2, **characterized in that** the sealing ring (18, 31) is arranged on a pintle (23, 30).

4. Spray head according to at least one of the preceding claims, **characterized in that** it has a central duct (29) that can be closed by a plug (28) at its end remote from the pintle (30).

5. Spray head according to at least one of the preceding claims, **characterized in that** the pintle (30) is fixed to fillets (32) arranged on the inside of the duct (29) and pointing in the longitudinal direction of the duct (29).

6. Spray head according to at least one of the preceding claims, **characterized by** a collar (33) intended to bear on the pipe (12).

7. Spray head according to at least one of the preceding claims, **characterized in that** housings (35, 36) for washer jets (37, 38) arranged at the side of the central duct (29) are connected to a straight transverse duct (43) and that the transverse duct (43) is closed by a plug (44, 45) at each of the two ends.

8. Spray head according to at least one of the preceding claims, **characterized in that** the housing (35, 36) for the washer jet (37, 38) has a ball seat (39, 40) and an adjusting ball (41, 42) capable of swivelling in the ball seat (39, 540).

9. Spray head according to at least one of the preceding claims, **characterized in that** multiple circumferential fillets (34), intended to bear on the inside of one of the pipes (12), are arranged on the connection piece (27).

## Revendications

1. Tête de gicleur (10, 16) comportant un logement pour au moins un gicleur de lavage (6, 37, 38) d'un système de lavage des glaces d'un véhicule automobile, une pièce de raccordement pour des tubes (13), qui peuvent être déplacés d'une façon télescopique par un dispositif de réglage (5) et qui peuvent être parcourus par un liquide de lavage, et une vanne (22) pouvant être manoeuvrée par le mouvement relatif des tubes pouvant être déplacés d'une façon télescopique et servant à fermer, dans la position de repos du système de lavage des glaces, un canal qui conduit au gicleur de lavage (6, 37, 38) et un élément de fermeture de la vanne (22) servant à fermer l'un des tubes (13) qui se trouve dans la position de repos **caractérisée par le fait que** la tête de gicleur (10, 26) porte l'élément de fermeture de la vanne (22).

2. Tête de gicleur selon la revendication 1 **caractérisée par le fait que** la tête de gicleur (10, 26) est prévue pour être fixée à un tube extérieur (12) et que l'élément de fermeture est conçu sous la forme d'une bague d'étanchéité (18, 31) s'appliquant, dans la position de repos, sur la paroi intérieure d'un tube intérieur (13).

3. Tête de gicleur selon la revendication 1 ou 2 **caractérisée par le fait que** la bague d'étanchéité (18, 31 ) est montée sur un tourillon (23, 30).

4. Tête de gicleur selon au moins l'une des revendications précédentes **caractérisée par le fait qu'**elle comporte, à son extrémité opposée au tourillon (30), un canal central (29) fermé par un bouchon de fermeture (28).

5. Tête de gicleur selon au moins l'une des revendications p récédentes **caractérisée par le fait que** le tourillon (30) est fixé à des nervures (32) placées sur le côté intérieur du canal (29) et dirigées dans le sens longitudinal du canal (29).

6. Tête de gicleur selon au moins l'une des revendications précédentes **caractérisée par** un épaulement (33) prévu pour s'appliquer sur le tube (12).

7. Tête de gicleur selon au moins l'une des revendications précédentes **caractérisée par le fait que** des logements (35, 36) pour des gicleurs (37, 38), disposés latéralement près du canal central (29), sont reliés par un canal transversal rectiligne (43) et que le canal transversal (43) est fermé à ses deux extrémités par un bouchon de fermeture (44, 45).

8. Tête de gicleur selon au moins l'une des revendications précédentes **caractérisée par le fait que** le logement (35, 36) pour les gicleurs (37, 38) comporte un siège pour une rotule (39, 40) et une rotule réglable (41, 42) qui peut pivoter dans le siège (39, 40).

9. Tête de gicleur selon au moins l'une des revendications précédentes **caractérisée par le fait que** plusieurs nervures circulaires (34), prévues pour s'appliquer sur le côté intérieur de l'un des tubes (12) sont disposées sur la pièce de raccordement (27).
